# EUROPEAN PATENT APPLICATION

(11) **EP 0 885 584 A1**
(43) Date of publication of application: **23.12.1998**
(21) Application number: 97304258.3
(22) Date of filing: 18.06.1997
(51) Int. Cl.: A47J 37/12

(54) **Rehydration and extrusion apparatus and method**

(71) Applicant: Tege Patents Aktiengesellschaft, 9497 Triesenberg (LI)
(72) Inventor: Drake, David, Letchworth, Hertfordshire (GB); Hughes, Martin Lawrence, Milton Keynes, Buckinghamshire (GB); Knowlton, Alan, Huntingdon, Cambridgeshire (GB); Newman, Michael John, Hunsdon, Ware, Hertfordshire (GB); Skingsley, John David, Letchworth, Hertfordshire (GB)
(74) Representative: Brunner, Michael John

(57) **Abstract**

A rehydration and extrusion apparatus 5 for extruding a rehydrated fluent food product is described. The apparatus has a cylinder 50 having an extrusion die 55 disposed at one end, in which there are a plurality of apertures. A piston 503 is movable along the cylinder 50 to the one end from its other end, and a mixing device 530 is disposed within the cylinder. The cylinder has openings 520,521 for the supply of powdered food material and water. Motors 56,57 drive the piston 503 along the elongate chamber and move the mixing device 530 around the cylinder 50.

## Description

The present invention relates to a rehydration and extrusion apparatus and method for extruding a rehydrated fluent food product. More specifically, the apparatus and method are for use in catering machines and, more particularly, to catering machines in which fluent food material is extruded into a plurality of individual segments prior to cooking. Specifically, the apparatus of the present invention may relate to an automatic vending machine for vending a fried potato product.

In EP-A-0621758 there is described and claimed a vending machine of this type and a mechanism is disclosed in which re-hydrated potato product is fed to an open-ended extrusion cup which is rotated across the surface of a flat plate to an extrusion station at which the re-hydrated potato product is extruded through an extrusion grate which is formed integrally in the plate and which, as the potato product moves through the grate, cuts the extrusion into plural separate potato sticks which then fall into a waiting cooking basket. Manufacture of the individual extrusion cups and the plate with the integral extrusion grate adds to the complexity of the manufacturing process and, in use, poses difficulties. The bottom of the rehydrated potato product within the extrusion cup has to slide over the surface of the plate and, due to inevitable heating of the plate during the cooking process, it is possible for the build up of small amounts of residue to occur interfering with the rotation process. Additionally, residual potato product can build up on the grate itself causing inconsistencies in the extrusion process.

Further problems occur in rehydrating the powdered food material in a uniform manner over a long period of use.

There is therefore a need to provide for efficient and uniform rehydration and extrusion and the present invention is aimed at providing an apparatus and method for achieving this.

According to the present invention there is provided a rehydration and extrusion apparatus for extruding a rehydrated fluent food product, the apparatus comprising:
an elongate chamber having an extrusion die disposed at one end, the die defining a plurality of apertures, and having therein a piston movable along the elongate chamber to the one end from its other end, a mixing device, and openings for the supply of powdered food material and water into the elongate chamber; and
motor means for driving the piston along the elongate chamber and moving the mixing device within the elongate chamber.

The invention also includes a method of rehydrating and extruding a fluent food product using the apparatus of the present invention, the method comprising feeding a powdered food material and water to an elongate chamber, moving a mixing device within the elongate chamber to mix the powdered material and water, and thereafter moving a piston through an extrusion stroke in the elongate chamber to extrude the rehydrated fluent food product through an extrusion die.

Preferably, the apparatus and method include the features of some or all of the attached claims.

Advantageously, after the piston has moved through its extrusion stroke it partially returns and then moves back again towards the extrusion die. This method of operation has been found to be advantageous in ensuring maximum removal of the fluent food product from the extrusion die. After the return of the piston towards the extrusion die, a sliding gate valve is preferably arranged to move over the face of the extrusion die remote from the piston for final removal of residual rehydrated product and to close the die and hence the end of the chamber before the next rehydration/mixing step takes place.

By the use of such a method and apparatus, the build-up of unwanted residues is reduced and there is an efficient cleaning action of the underside of the extrusion die.

Advantageously, the die is formed by a grid of metallic lands, each of the lands forming the die may have a cross-section which is tapered at least upwardly and preferably also downwardly and in a preferred embodiment, the cross-section is substantially rhombus-shaped. It has been found that this shape for the cross-section of the lands reduces the probability of residue build-up on the die and the tapered form of the cross-section at its bottom edge also reduces the probability of the material being drawn back through the support surface and the die when the extrusion piston is withdrawn. Preferably the grid provides predominantly substantially square apertures so that the extruded product is in the form of conventional "chips".

Providing the piston head with a resilient, compliant, surface and with a pattern matching the pattern of the extrusion die, gives the twin benefits of a wiping action on the wall(s) of the extrusion cup(s) and a secure fit against the top of the die to reduce residue build-up.

One example of a rehydration and extrusion apparatus according to the present invention will now be described with reference to the accompanying drawings in which:
Figure 1 is a diagrammatic front view of a vending machine embodying the apparatus of the present invention;
Figure 2 is an isometric view of a rehydration and extrusion apparatus according to the invention;
Figure 3 is a vertical section through the rehydration and extrusion apparatus;
Figure 4 is a detailed view of a top part of the rehydration and extrusion apparatus shown in Figure 3;
Figure 5 is a cross-section through a cylinder of the rehydration and extrusion apparatus shown in Figure 3;
Figure 6 is an underneath plan view of a piston head of the rehydration and extrusion apparatus shown in Figure 3;
Figure 7 is a cross-section through the piston head shown in Figure 6;
Figure 8 is an underneath isometric view of a sliding gate valve of the rehydration and extrusion apparatus shown in Figure 3;
Figure 9 is an isometric part view of a cooking apparatus or station of the catering apparatus of the invention;
Figure 10 is a first, axial section through the cooking apparatus; and
Figure 11 is a second section through the cooking apparatus offset from the diametral plane.

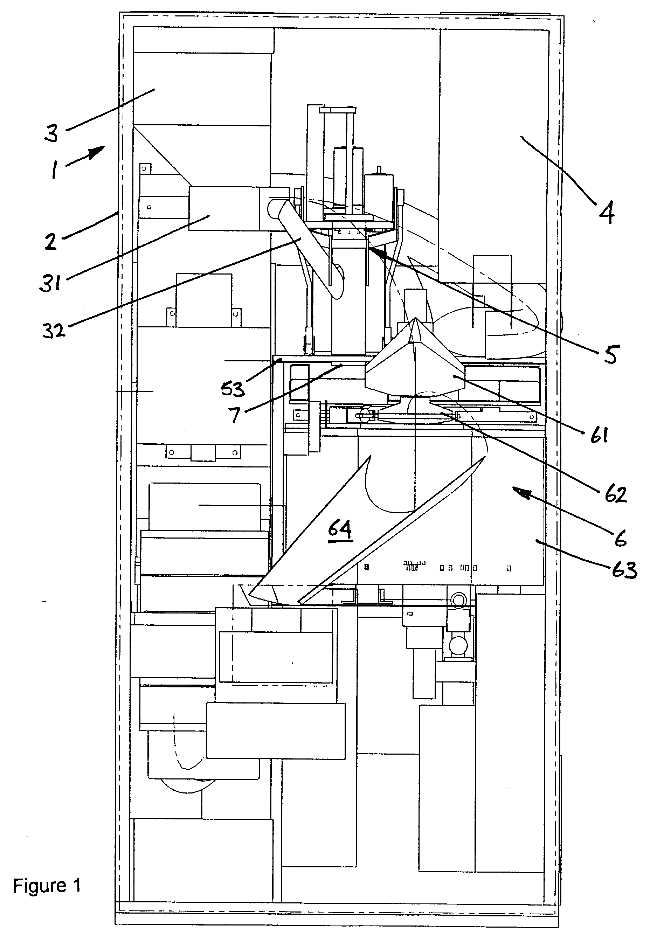

The catering machine 1 shown in Figure 1 is a vending machine designed for dispensing orders of potato chips (french fries) and includes a casing 2 within which all the operative components of the vending machine are disposed.

The vending machine includes a hopper 3 for containing a powdered potato product and a dispenser 4 of condiments such as tomato sauce in miniature pots or otherwise suitably packaged, and which are dispensed separately or with the chips. Water is fed from a mains supply. The powdered potato product is fed, via means of a auger system 31, and water from the mains supply is fed via a suitable pressure and flow control mechanism, which includes a pump, flow and pressure regulators and flow control valves (none of which are shown), to a rehydration and extrusion apparatus 5 which will be described in more detail below. A sliding gate valve 7 closes off the bottom of the rehydration and extrusion apparatus.

From the rehydration and extrusion apparatus rehydrated potato mix is extruded into one of four cooking baskets 61 which form part of a cooking station 6. The cooking station 6 includes a housing 63 in which is disposed a vessel 65 providing a bath of cooking oil which is heated to the desired temperature by external heater bands (not shown). Individual portions of potato chips or french fries are extruded into the cooking baskets 61 for cooking within the oil bath. The individual baskets are rotated on a carrousel 62 and after having been cooked for the desired length of time the respective cooking basket is pivoted out of the cooking oil to deposit the portion of chips onto a delivery chute 64 from where it is dispensed at the front of the vending machine into cups provided from a cup supply mechanism (not shown) to the user.

The vending machine includes an air treatment system as described in our co-pending application reference MJB05827EP and which will not be further described in this specification as it forms no part of the present invention. Likewise, other components of the vending machine which are not necessary for a full understanding of the rehydration and extrusion apparatus of the present invention are not described in detail.

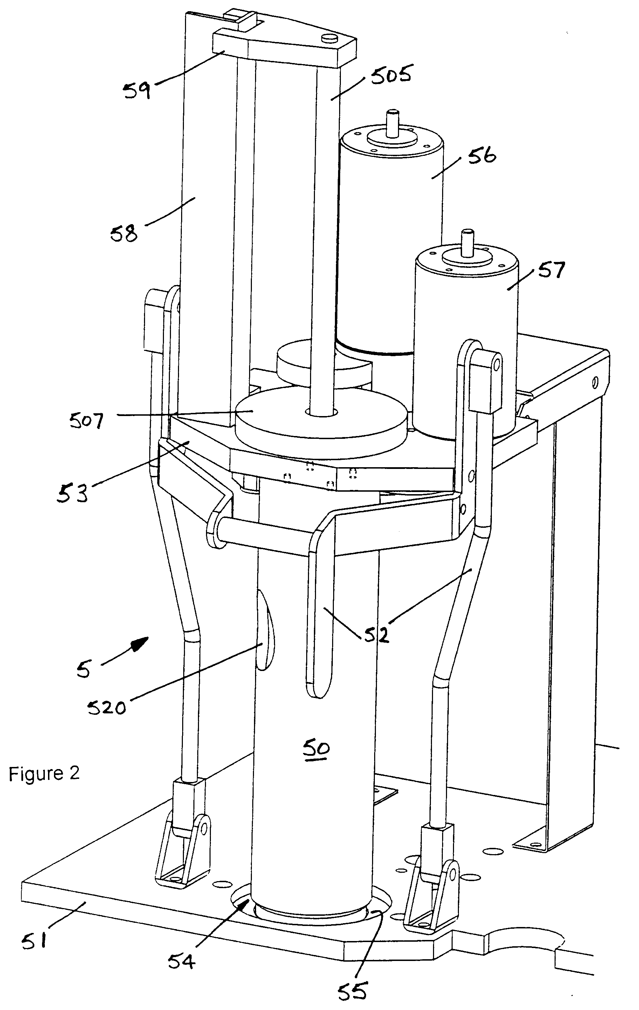

Figures 2, 3 and 4 show further detail of the rehydration and extrusion apparatus of the present invention in more detail and the following description relates specifically to those figures.

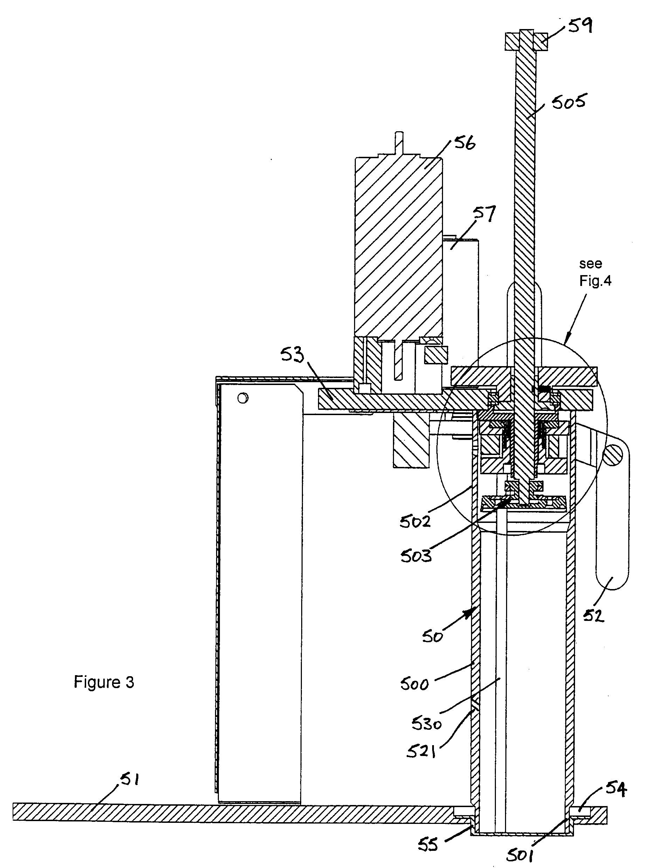

The rehydration and extrusion apparatus 5 comprises an elongate steel cylinder 50 which provides a mixing and extrusion chamber. The cylinder 50 is mounted by a quick disconnect coupling (not shown) on a support element 53 in the form of a metal plate which can be lifted upwardly and pivoted backwardly from the position shown in Figure 2 by means of a lever mechanism 52 which is mounted on a base plate 51, itself suitably supported within the casing 2. Located in a stepped aperture 54 in the base plate 51 is a circular extrusion die 55 which is generally cup-shaped in cross-section as can be seen in Figure 3 and which is formed by a grid of intersecting metal lands to form an array of substantially square apertures. The support element or plate 53 also carries a pair of electric motors 56, 57 and a slide 58 on which is mounted a slider 59.

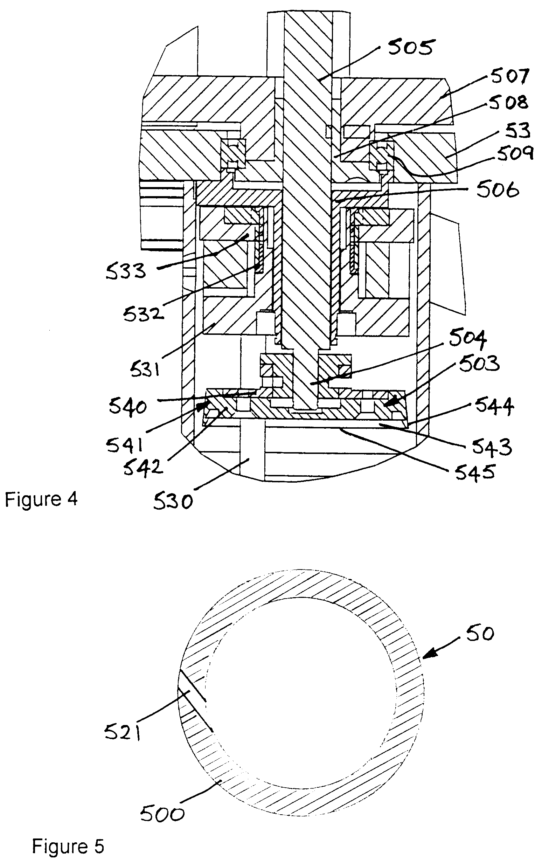

As best seen in Figures 3 and 4, the cylinder wall 500 has a reduced thickness at its lower end 501, the external diameter being dimensioned so as to fit snugly within the cup-shaped form of the extrusion die 55. At its upper end 502 the cylinder wall 500 similarly has a reduced thickness, but whereas the reduced wall thickness at the lower end of 501 is provided by a chamfered step in the outer surface of the cylinder wall, the reduced thickness at the upper end 502 is provided by a chamfered step in the inner surface of the cylinder wall 500 as can be seen in Figure 3.

To enable powder to be supplied from the hopper 3 via the auger 31, an elongate opening 520 is provided through the wall 500 of the cylinder 50 angled downwardly at approximately 45° to the longitudinal axis of the cylinder. A chute 32 extends into the opening from the end of the auger 31. For the supply of water for rehydration of the powder, a smaller hole 521 is provided through the wall 500 of the cylinder 50 below the opening 520 and at approximately 90° to it. This is angled downwardly and tangentially to the cylinder wall 500 as seen in Figure 5 to provide a swirling action within the cylinder in order to improve mixing of the powder and to prevent water splashing upwards.

Within the cylinder 50 a piston 503 is located, supported so as to be rotatable about the central longitudinal axis of the cylinder 50 on a spigot 504 at the end of a threaded drive rod 505 which is supported at its other end in the slider 59 and, where it passes into the cylinder 50, by a bush 506. A drive mechanism comprising the motor 56 a drive gear 507 and a threaded drive nut 508, in threaded engagement with the drive rod 505 and supported on a bearing 509 in the support plate 53, drives the piston 503 in use. The slider 59 serves to prevent rotation of the threaded drive rod 505 during operation of the motor 56 and the resultant rotation of the drive gear 507 in engagement with the drive rod.

A mixing device in a form of a cylindrical steel mixing rod 530 extends along the length of the cylinder 50, passing through the piston 503 and being held at its upper end in a driven gear 531 which is mounted for rotation on the bush 506. The mixing rod, as can be seen from Figures 4 & 5, is mounted eccentrically near to the inner surface of the cylinder wall 500 to provide for uniformity and consistency of mixing. The bush 506 is elongate in order to provide angular stability for the drive rod 505 and the driven gear 531 and mixing rod 530. The piston 503 can slide over the mixing rod 530 and, when the driven gear 531 is rotated by the motor 57 through a drive gear 533 and clutch 532, the piston rotates on the spigot 504 as the rod is rotated around the central longitudinal axis of the cylinder 50.

The piston 503 comprises a bearing disk 540 which is mounted on the spigot 504 and this, in turn, carries a piston head 541 which is arranged to be easily removable for ease of cleaning or replacement. The piston head 541 comprises a two-part plastics/synthetic rubber disk, the main part 542, which is of harder plastics, providing a disk-like support for the inner part 543 and a scraper edge 544 which in use scrapes the inside of the wall 500 of the cylinder 50 as the piston moves downwards in order to remove rehydrated product from wall of the cylinder. The inner part 543 which is of a softer, synthetic rubber material, provides the pressure face 545 of the piston in order to extrude the potato product through the die 55. The two parts of the piston head 541 can be co-moulded using suitable polymers to ensure satisfactory adhesion between the two parts.

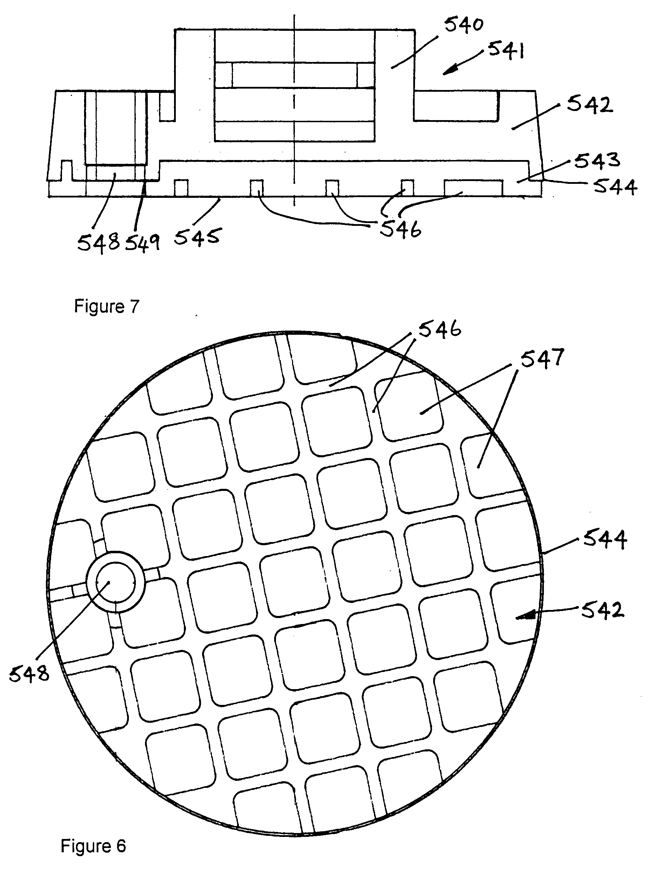

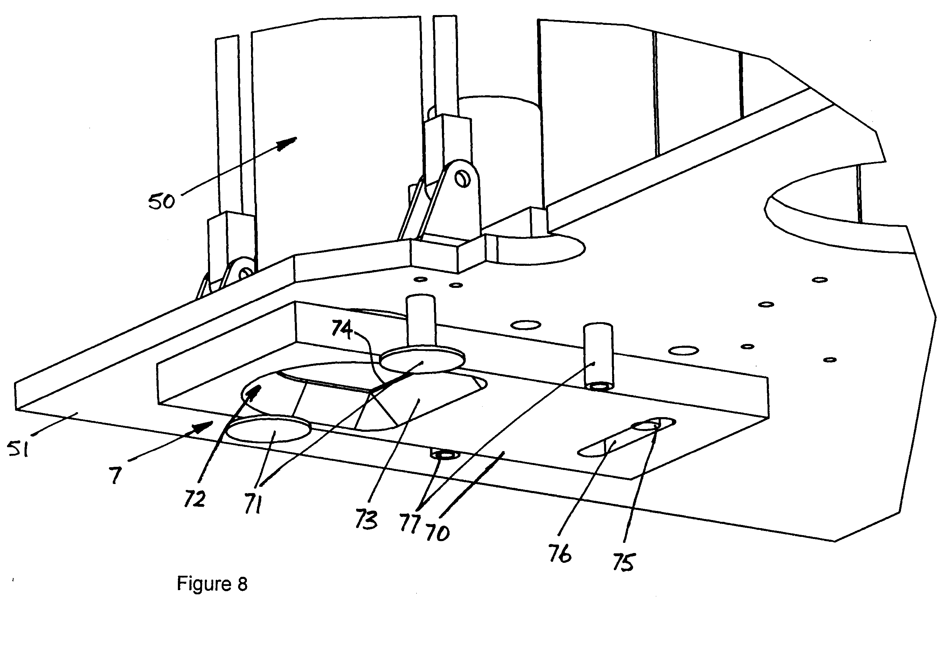

Figures 6 & 7 show a slightly modified form of the piston head 541 from that shown in Figures 3 & 4, in which the bearing disk 540 is integrally formed with the main part 542 of the piston head 541. As can be seen in Figure 6, the face of the inner part 543 of the piston head 541 has a series of grooves 546 in the form of an orthogonal grid array which matches the array of lands of the extrusion die 55. Raised areas 547 between the grooves 546 match the apertures of the extrusion die 55. The piston head 541 has a bore 548 therethrough to receive the mixing rod 530, the edge 549 of the bore within the first part 542 also providing a scraper ring in order to scrape the mixing rod 530 as the piston moves downwards in order to remove rehydrated product from its surface.

In order to ensure registration of the lands of the die 55 with the grooves 546 in the piston head when the piston reached the end of its extrusion stroke and bears against the die 55, a wrap-spring clutch 532 is provided between the drive bearing 531 and a drive gear 533 which is driven by the motor 57, in order to enable the drive bearing and hence the mixing rod 530 and thus the piston 503 to be positively angularly orientated at the end of the mixing phase, i.e. when the motor 57 finishes rotating the rod 530.

Figure 8 shows the sliding gate valve 7 from the underside of the rehydration/extrusion apparatus. The valve 7 comprises a plastics plate 70 which acts to close off the bottom of the extrusion die 55 during the mixing/rehydration phase. Spring-loaded retaining pins 71 hold the plate 70 against the underside of the extrusion die 55. The plate 70 has a D-shaped aperture 72 which registers with the die 55 when the plate 70 is moved into the position shown in Figure 8, in which rehydrated potato can be extruded through the die 55. The aperture 72 has chamfered edges 73 as shown, and a cutting edge 74 which, when it slides over the bottom of the die 55, acts to scrape or cut residual potato mix from the bottom of the die 55. The gate valve 7 is actuated by a motor drive (not shown) and an eccentrically mounted drive pin 75 which moves in a slot 76 in the plate 70 as it is rotated about the axis of the motor drive. Guide pins 77 also help to guide the movement of the plate 70. The plate 70 may include a metal backing plate (not shown) to provide additional stiffness.

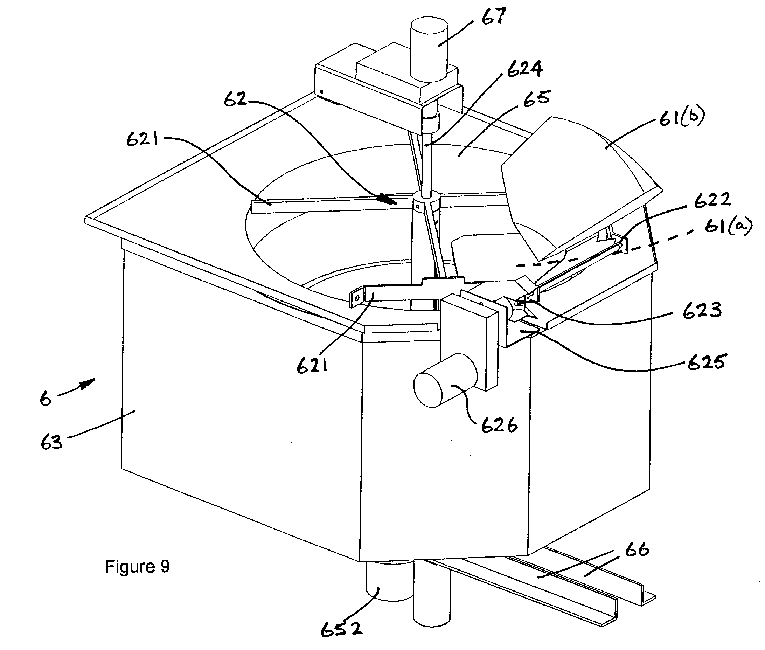

Below the rehydration and extrusion apparatus 5 and the gate valve 7 is supported the cooking station or apparatus 6 which can be seen in more detail in Figures 9 to 11. Parts have been left out of figure 9 in order to provide clarity.

The cooking station 6 comprises a casing 63 which is supported on a pair of frame elements 66. The casing 63 encloses and supports a stainless steel oil bath 65 in which cooking oil is heated to the required temperature by means of electric heating elements in the form of bands (not shown) wrapped around the bath 65. Suitable insulation 68 is provided in the space between the inner and outer walls of the bath 65 to ensure heat retention during cooking and to reduce the amount of electric energy supplied to the cooking station. To receive the extruded potato segments from the extrusion die 55, four perforated metal baskets 61 (only one of which is shown in Figure 9, but in two positions 61(a) and 61(b)) are provided on a carousel 62. Each of the baskets is pivotally supported on a carousel frame 621 by means of a pivot rod 622 and a pivot lever 623. Figures 9 to 11 show the basket 61 in two positions (a) in its normal (cooking) position and (b) in its pivoted (delivery) position. The carousel 62 is rotatable on a shaft 624 under the action of a motor 67 to move the individual portion of chips around the bath from the position at which they are received from the rehydration and extrusion apparatus 5 to the position at which they are delivered to the delivery chute 64. To pivot the baskets 61 out of the oil bath 65, at the delivery position the pivot lever 623 registers with a drive link 625 supported on a motor drive 626.

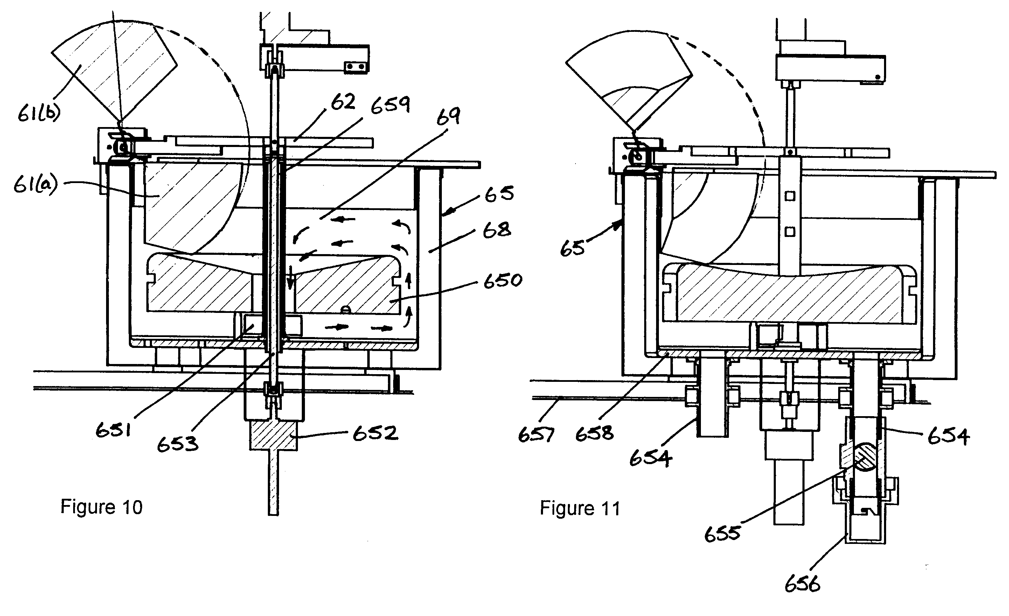

Within the bath or vessel 65 there are positioned a solid spacer 650 and an agitator 651 driven by a further motor drive 652. The agitator 651 is used to provide a movement of oil 69 around the spacer 650 as indicated by the arrows in Figure 10, to assist the convection currents which result from heating the oil 69, in order to maintain a substantially uniform oil temperature within the bath 65. The agitator is driven from the motor 652, via a jointed shaft 653 running up the centre of the oil bath 65 through a central, fixed tube 659 which extends above the oil surface. This avoids the need for a seal at the bottom of the bath 65, and the tube 659 provides a stable mounting for the carousel 62. The solid body 650 also reduces the volume of oil that must be maintained in the bath 65 and adds thermal mass to help stabilise oil temperature when potato is extruded into the baskets 61.

The bottom wall 658 of the bath 65 has a pair of sumps 654 which allow for collection and removal of potato debris by means of rotatable ball valves 655 and catch pots 656 connected by bayonet couplings 660 (only one of each of which is shown in Figure 11). The ball valves 655 and catch pots 656 are mechanically interlocked for safety, to prevent the ball valves being opened when the respective catch pot has been removed. An oil supply line 657 removes oil from one of the sumps 654, sending it to a filter, (not shown) and supplies it back to the oil bath through the other of the sumps 654, oil being fed through the supply line 657 by means of a pump. Locating the ball valves below the point of entry of the supply line 657 in each case, allows larger particles to fall past the supply line, thus avoiding clogging of the filter with larger particles. An oil reservoir (not shown) is provided to allow the oil level within the bath to be maintained under the control of a level sensor (not shown).

The operation of the vending machine is controlled by a central processing unit (not shown).

In use, when an order for potato chips is input into the machine a measured quantity of potato powder is dispensed from the hopper 3 into the chute 32 by the auger 31, controlled by a motor (not shown), and from there into the cylinder 50. At the same time (and for a moment longer) water is fed into the cylinder 50 and the motor 57 is actuated to cause the mixing rod to be driven around the cylinder to mix the water and powder thoroughly. After a few seconds, the rotation of the mixing rod 530 is stopped to allow the mix to settle. The wrap-spring clutch 532 ensures that the mixing rod returns to the same angular position each time so that the grooves 546 in the piston head 541 are registered with the lands in the extrusion die 55.

The sliding gate valve 7 is then opened after a few more seconds and the piston 503 is driven downwards under the action of the motor 56 to extrude the rehydrated fluent potato mix into the basket 61 disposed beneath it. The motor 56 lifts the piston 503 away from the die 55 and then pushes it back again in order to ensure substantially complete removal of potato mix from the die 55. The sliding gate valve 7 is then moved back to close off the bottom of the cylinder and at the same time, by means of the cutting edge 74, scrape the bottom of the extrusion die 55 to clear any minor amounts of potato mix remaining on the bottom of the die. The piston completes its cycle by a return stroke back to the position shown in Figures 3 & 4.

The carousel is indexed around the oil bath vessel 65 by the motor 67 in a series of steps until the basket 61 arrives at the delivery position. The basket 61 is then pivoted out of its position (a) within the vessel 65, by means of the motor drive 626, firstly to an intermediate position (not shown) at which it pauses to allow oil to drain from the potato chips and the basket, and then onwards to the position (b) in order to deliver the portion of fried potato chips onto the chute 64 and hence to suitable cups supplied to a retrieval location at the front of the vending machine, and thus to the customer. The basket 61 is then returned to the vessel 65 and the carousel then indexed again if a further portion is being cooked.

## Claims

1. A rehydration and extrusion apparatus for extruding a rehydrated fluent food product, the apparatus comprising:
an elongate chamber having an extrusion die disposed at one end, the die defining a plurality of apertures, and having therein a piston movable along the elongate chamber to the one end from its other end, a mixing device, and openings for the supply of powdered food material and water into the elongate chamber; and
motor means for driving the piston along the elongate chamber and moving the mixing device within the elongate chamber.

2. Apparatus according to claim 1, further comprising a closure member arranged to close the elongate chamber adjacent the extrusion die.

3. Apparatus according to claim 1 or claim 2, wherein the die is removably mounted at the one end of the elongate chamber.

4. Apparatus according to any of claims 1 to 3, wherein the piston carries an extrusion head having a relief pattern matching the pattern of apertures in the extrusion die and a mechanism is provided for aligning the relief pattern of the extrusion head with the pattern of apertures in the extrusion die when the piston is at the one end of the elongate chamber and the extrusion head engages the extrusion die.

5. Apparatus according to any of claims 1 to 4, wherein the piston is rotatable about its axis and the mixing device comprises a rod extending through the piston along the elongate chamber and being movable by the motor means around the chamber, the piston thus rotating with it in use.

6. Apparatus according to claim 4 and claim 5, wherein the mixing device includes a clutch and ratchet mechanism for precisely locating the rod and the extrusion head when the piston is at the one end of the elongate chamber.

7. Apparatus according to any of claims 1 to 6, wherein the motor means is arranged to cause the piston to move in a cycle including a full extrusion stroke from the other end of the elongate chamber to the one end, a partial return stroke away from the one end of the elongate chamber, a partial stroke back to the one end of the chamber, and a full return stroke from the one end to the other end.

8. Apparatus according to any of claims 1 to 7, wherein the extrusion die is removably mounted in a support member and the elongate chamber is movable relative to the support member to allow access to and cleaning of the die.

9. Apparatus according to any of claims 1 to 8, wherein the elongate chamber has a wall which is stepped outwardly at the other end of the chamber.

10. Apparatus according to any of claims 1 to 9, wherein the elongate chamber, piston and motor means are mounted on a support and the elongate chamber is releasably mounted on the support to enable its removal for cleaning or access to the piston.

11. Apparatus according to claim 2, wherein the closure member comprises a sliding gate valve arranged to slide over the face of the extrusion die remote from the piston, the gate valve having a cutting edge for removal of residual rehydrated product after extrusion.

12. Apparatus according to any of claims 1 to 11, wherein the or each water Supply opening is orientated substantially tangentially to the inside surface of the elongate chamber at an angle to the longitudinal axis of the chamber.

13. Apparatus according to any of claims 1 to 12, wherein the motor means comprises separate motors for moving the piston and rotating the mixing device.

14. A catering machine for dispensing a cooked segmented product such as potato chips, comprising a hopper for containing a supply of powdered food material, a rehydration and extrusion apparatus according to any of claims 1 to 13 arranged to receive powdered food material from the hopper and water, a cooking device arranged to receive extruded rehydrated food material from the rehydration and extrusion apparatus, and a dispensing means for dispensing portions of cooked product from the cooking device.

15. A machine according to claim 14, wherein the cooking device comprises
an oil bath having one or more heating elements disposed there around to heat oil therein;
a carousel disposed for rotation around the oil bath and supporting a plurality of baskets within the oil bath for receiving extruded and rehydrated food material from the rehydration and extrusion apparatus, the baskets being pivotal out of the oil bath to remove cooked product therefrom; and
means for agitating oil within the bath to enable a substantially uniform oil temperature throughout the oil bath.

16. A method of rehydrating and extruding a fluent food product, the method comprising feeding a powdered food material and water to an elongate chamber, moving a mixing device within the elongate chamber to mix the powdered material and water, and thereafter moving a piston through an extrusion stroke in the elongate chamber to extrude the rehydrated fluent food product through an extrusion die.

17. A method according to claim 16, wherein the piston is rotatable about its axis and the mixing device, which comprises a rod extending through the piston along the elongate chamber, is rotated by the motor means around the elongate chamber to mix the powder and water, the piston rotating with it.

18. A method according to claim 16 or claim 17, wherein the piston carries an extrusion head having a relief pattern matching a pattern of apertures in the extrusion die and the relief pattern on the extrusion head is aligned with the pattern of apertures in the extrusion die when the piston is at the one end of the elongate chamber and the extrusion head engages the extrusion die.

19. A method according to any of claims 16 to 18, wherein the piston moves in a cycle including a full extrusion stroke from the other end of the elongate chamber to the one end, a partial return stroke away from the one end of the elongate chamber, a partial stroke back to the one end of the chamber, and a full return stroke from the one end to the other end.

20. A method of preparing a cooked food product comprising rehydrating and extruding a powdered food material in accordance with any of claims 16 to 19, and thereafter cooking the extruded material in an oil bath.

21. A method according to claim 20, further comprising agitating the oil within the oil bath to provide a substantially uniform cooking temperature.
